# EUROPÄISCHE PATENTSCHRIFT

(11) **EP 4 335 022 B1**
(45) Veröffentlichungstag und Bekanntmachung des Hinweises auf die Patenterteilung: **08.07.2026**
(21) Anmeldenummer: 22728183.9
(22) Anmeldetag: 09.05.2022
(51) Int. Cl.: H02K 7/116, B60K 7/00

(54) **ANTRIEBSEINHEIT MIT EINEM ELEKTROMOTOR, EINEM PLANETENGETRIEBE UND EINER ELEKTROMAGNETISCHEN BREMSE**
DRIVE UNIT WITH AN ELECTRIC MOTOR, A PLANETARY GEAR AND AN ELECTROMAGNETIC BRAKE
UNITÉ D'ENTRAÎNEMENT DOTÉ D'UN MOTEUR ÉLECTRIQUE, D'UN ENGRENAGE PLANÉTAIRE ET D'UN FREIN ÉLECTROMAGNÉTIQUE

(30) Priorität: 07.05.2021 EP 21172746
(43) Veröffentlichungstag der Anmeldung: 13.03.2024
(73) Patentinhaber: maxon international ag, 6072 Sachseln (CH)
(72) Erfinder: HUPFER, Florian, 79263 Simonswald (DE); WIRSICH, Nico, 79331 Teningen (DE)
(74) Vertreter: Grünecker Patent- und Rechtsanwälte PartG mbB
(86) Internationale Anmeldenummer: PCT/EP2022/062398
(87) Internationale Veröffentlichungsnummer: WO 2022/234138

(56) Entgegenhaltungen:
- AU-A4- 2014 101 471
- JP-A- 2009 096 429
- JP-B2- 6 528 731
- US-A- 6 048 288
- US-B1- 6 536 561

## Beschreibung

Die vorliegende Erfindung betrifft eine Antriebseinheit nach dem Oberbegriff des unabhängigen Anspruchs 1.

Eine gattungsgemäße Antriebseinheit umfasst einen Elektromotor, der eine Motorwelle antreibt, ein Planetengetriebe mit einem Hohlrad, wobei das Planetengetriebe zumindest eine erste Getriebestufe aufweist, und wobei die erste Getriebestufe mindestens ein Planetenrad aufweist, und eine elektromagnetische Bremse mit einer Erregerspule, wobei die elektromagnetische Bremse zwischen dem Elektromotor und dem Planetengetriebe angeordnet ist.

Eine Antriebseinheit nach dem Oberbegriff des unabhängigen Anspruchs 1 ist beispielsweise aus CN 102170191 bekannt. Dieses Dokument zeigt eine axial kurz bauende Antriebseinheit mit einem Elektromotor, einem Planetengetriebe und einer elektromagnetischen Bremse, wobei das Planetengetriebe und die Bremse hintereinander angeordnet und radial im Zentrum des Motors integriert sind. Durch diese Anordnung kann die axiale Länge der Antriebseinheit zwar verkürzt werden, dafür wird aber ein größerer Durchmesser der Antriebseinheit nötig. Es besteht dementsprechend weiterhin Bedarf an noch kompakteren Antriebseinheiten mit den genannten Komponenten. Das Dokument US6536561 B1 offenbart auch eine elektromagnetisch betätigte Bremse.

Die vorliegende Erfindung hat sich deshalb zur Aufgabe gestellt, eine Antriebseinheit der gattungsgemäßen Art anzugeben, die einen, insbesondere in axialer Richtung, besonders kompakten Aufbau der Antriebseinheit ermöglicht.

Die Aufgabe wird durch die Merkmale des unabhängigen Anspruchs 1 gelöst. Demnach liegt dann eine erfindungsgemäße Antriebseinheit vor, wenn die Erregerspule zumindest teilweise in einer Ausnehmung des Hohlrads aufgenommen ist.

Indem die Erregerspule zumindest teilweise in der Ausnehmung des Hohlrads aufgenommen ist, kann die Antriebseinheit, insbesondere in axialer Richtung, besonders kompakt aufgebaut sein. Zusätzlich entfällt der Bedarf für einen Spulenkörper, wodurch die Antriebseinheit noch mal kompakter aufgebaut werden kann. Vorzugsweise weist das verwendete Planetengetriebe, wenn möglich, nur eine oder zwei Getriebestufen auf, sodass die Antriebseinheit in axialer Richtung besonders kompakt aufgebaut werden kann.

Vorteilhafte Ausführungsformen der vorliegenden Erfindung sind Gegenstand der Unteransprüche.

Gemäß einer bevorzugten Ausführungsform der vorliegenden Erfindung ist die Erregerspule derart in der Ausnehmung aufgenommen, dass eine axiale Ausdehnung des Planetenrads zu mindestens 50%, vorzugsweise zu mindestens 70%, mit einer axialen Ausdehnung der Erregerspule überlappt. Durch diese Anordnung kann die Antriebseinheit in axialer Richtung sehr kompakt gestaltet werden, da die axiale Ausdehnung des Planetenrads und die damit einhergehende axiale Ausdehnung des Hohlrads in dem Bereich, in dem das Planetenrad mit dem Hohlrad kämmt, zur Platzierung der Erregerspule genutzt werden kann.

In einer besonders bevorzugten Ausführungsform der vorliegenden Erfindung entspricht eine axiale Position einer dem Elektromotor zugewandten Stirnseite der Erregerspule entweder einer axialen Position einer dem Elektromotor zugewandten Stirnseite des Planetenrads oder die axiale Position der dem Elektromotor zugewandten Stirnseite der Erregerspule ist weiter von dem Elektromotor entfernt als die axiale Position der dem Elektromotor zugewandten Stirnseite des Planetenrads. Auch dies ermöglicht einen besonders kompakten Aufbau der Antriebseinheit, da die Erregerspule derart zum Planetengetriebe positioniert wird, dass kein zusätzlicher axialer Bauraum benötigt wird.

Gemäß einer weiteren bevorzugten Ausführungsform der vorliegenden Erfindung bildet eine Ringnut die Ausnehmung des Hohlrads, wobei die Ringnut an einer dem Elektromotor zugewandten Stirnseite des Hohlrads geöffnet ist. Vorzugsweise sind die Ringnut und das Hohlrad koaxial. Eine derart ausgebildete Ausnehmung des Hohlrads ist einfach und kostengünstig zu fertigen. Außerdem kann die Erregerspule gut in der Ringnut platziert werden.

Vorzugsweise ist die Erregerspule derart in der Ausnehmung aufgenommen, dass die Erregerspule in axialer Richtung betrachtet vollständig in der Ausnehmung aufgenommen ist. Dadurch wird ein kompakter Aufbau der Antriebseinheit ermöglicht.

Gemäß einer weiteren bevorzugten Ausführungsform der vorliegenden Erfindung bildet die Motorwelle ein Sonnenrad der ersten Getriebestufe des Planetengetriebes. Dies ermöglicht einen einfachen Aufbau der Antriebseinheit. Zusätzlich werden keine zusätzlichen Komponenten wie etwaige Mitnehmer benötigt, die den nötigen Bauraum erhöhen würden. Vorzugsweise ist das Hohlrad mit einem Gehäuse des Elektromotors verbunden. Damit ist das Hohlrad ein feststehendes Hohlrad. Auch dies ermöglicht einen einfachen und kompakten Aufbau der Antriebseinheit.

Gemäß einer weiteren bevorzugten Ausführungsform der vorliegenden Erfindung weist die elektromagnetische Bremse in axialer Richtung ausgehend vom Elektromotor eine Druckplatte, eine Bremsscheibe, die mit der Motorwelle verbunden ist, eine Ankerplatte und mindestens ein Vorspannmittel auf, wobei die Bremse einen angezogenen Zustand aufweist, in dem das Vorspannmittel die Ankerplatte auf die Bremsscheibe presst und die Bremsscheibe dadurch auf die Druckplatte gepresst wird, und wobei die Bremse einen gelösten Zustand aufweist, in dem die Erregerspule die Ankerplatte entgegen einer Kraft des Vorspannmittels auf Grund einer durch die Erregerspule erzeugten elektromagnetischen Kraft zu sich zieht. Eine derart ausgebildete elektromagnetische Bremse lässt sich vorteilhafter Weise als Sicherheitsbremse verwenden, da die Bremse in den angezogenen Zustand übergeht, sobald kein Strom mehr durch die Erregerspule fließt. Außerdem kann eine derartige Bremse äußerst kompakt aufgebaut sein. Vorzugsweise ist das Vorspannmittel mindestens eine Druckfeder. Damit ist das Vorspannmittel eine relativ günstige Komponente, die zusätzlich wenige Bauteile bzw. nur ein Bauteil benötigt und damit sehr kompakt ausgebildet sein kann.

In einer besonders bevorzugten Ausführungsform der vorliegenden Erfindung überlappt eine axiale Ausdehnung der Ankerplatte zumindest teilweise, vorzugsweise vollständig, mit einem Teil der axialen Ausdehnung des Hohlrads. Dadurch kann die Antriebseinheit in axialer Richtung noch kompakter ausgeführt werden. Vorzugsweise hat die Ankerplatte eine kreisförmige Öffnung und ist koaxial mit dem Hohlrad ausgeführt. So kann zum Beispiel ein Vorsatz an dem Hohlrad in der kreisförmigen Öffnung liegen, welcher eine Abdeckung des Planetenrads oder eine Dichtung hält.

Vorzugsweise ist die Ankerplatte drehfest gegenüber dem Hohlrad gehalten.

In einer besonders bevorzugten Ausführungsform der vorliegenden Erfindung bildet eine Zwischenplatte des Elektromotors, insbesondere ein Motorflansch, die Druckplatte aus. Dadurch kann die Antriebseinheit besonders kompakt gestaltet werden. So wird unter anderem keine zusätzliche Druckplatte benötigt und es kann eine Komponente eingespart werden.

Gemäß einer weiteren bevorzugten Ausführungsform der vorliegenden Erfindung ist die Bremsscheibe direkt an ein Motorritzel der Motorwelle angebunden. Vorzugsweise bildet das Motorritzel, mit welchem die Bremsscheibe formschlüssig verbunden ist, gleichzeitig das Sonnenrad der ersten Getriebestufe des Planetengetriebes. So bedarf es keinem zusätzlichen Mitnehmer zwischen Bremsscheibe und Motorwelle und die Bremse sowie die Antriebseinheit können sehr kompakt und mit wenigen Komponenten aufgebaut werden.

Gemäß einer weiteren bevorzugten Ausführungsform der vorliegenden Erfindung sitzt das Vorspannmittel in einer Ausnehmung des Hohlrads. Auch dies ermöglicht einen kompakteren Aufbau der Antriebseinheit. Vorzugsweise liegt die Ankerplatte im gelösten Zustand der Bremse an einer der Bremsscheibe zugewandten Stirnseite des Hohlrads an.

Gemäß einer weiteren bevorzugten Ausführungsform der vorliegenden Erfindung ist ein Distanzstück zwischen einer Anlagefläche an der dem Elektromotor zugewandten Stirnseite des Hohlrads und einer der Bremsscheibe zugewandten Fläche der Druckplatte angeordnet. Somit kann der axiale Abstand zwischen der Druckplatte und dem Hohlrad genau fixiert werden. Damit kann die Bremswirkung der Bremse genau eingestellt werden.

In einer besonders bevorzugten Ausführungsform der vorliegenden Erfindung ist die Antriebseinheit ein Radantrieb. Die sehr kompakte Antriebseinheit mit der elektromagnetischen Bremse als Sicherheitsbremse eignet sich für einen vorteilhaften Radantrieb.

Die Erfindung wird im Folgenden anhand von Zeichnungen näher erläutert.

Es zeigen:
- Figur 1:: einen Längsschnitt eines Ausführungsbeispiels des erfindungsgemäßen Antriebssystems, wobei der Elektromotor zur Übersicht nicht geschnitten dargestellt ist,
- Figur 2:: eine Detailansicht eines Längsschnitts des Ausführungsbeispiels des erfindungsgemäßen Antriebssystems.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

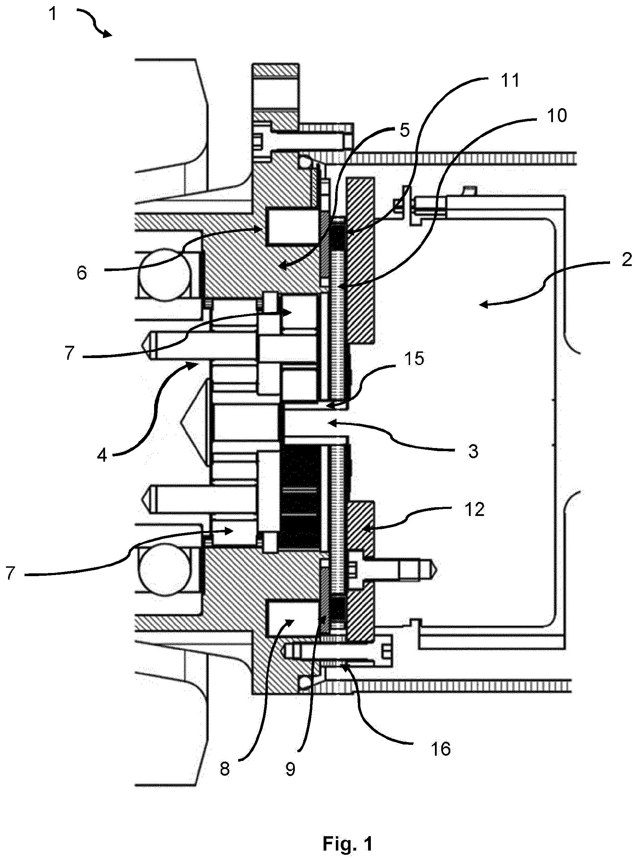

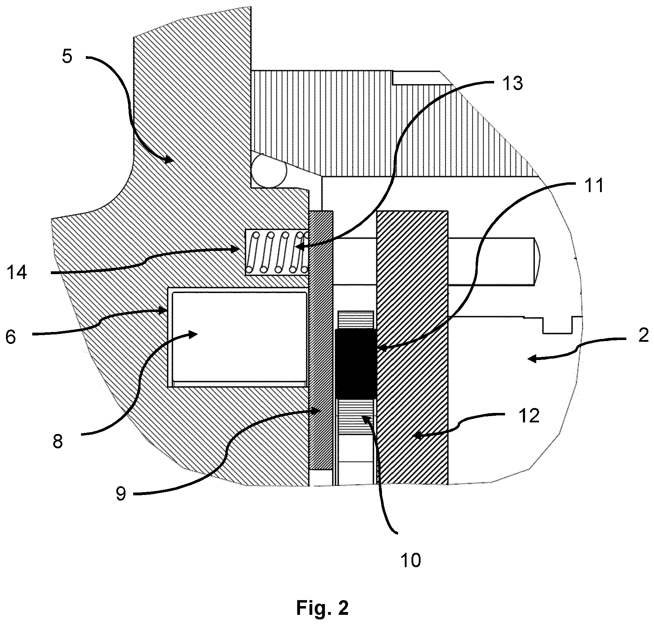

Figur 1 und 2 zeigen Längsschnitte eines Ausführungsbeispiels des erfindungsgemäßen Antriebssystems 1. Der Elektromotor ist in Figur 1 zur Übersicht nicht geschnitten dargestellt. Figur 2 zeigt nur eine Detailansicht eines Längsschnitts. Es ist anzumerken, dass der Längsschnitt der Figur 2 nicht dem der Figur 1 entspricht. Die Schnittebene ist um einen Winkel zur Achse des Antriebssystems 1 gedreht.

Die erfindungsgemäße Antriebseinheit 1 weist einen Elektromotor 2 auf, der eine Motorwelle 3 antreibt. An das Motorritzel 15 der Motorwelle 3 ist ein Planetengetriebe 4 angeschlossen, wobei die Motorwelle 3 das Sonnenrad des Planetengetriebes 4 bildet und das Planetengetriebe 4 außerdem Planetenräder 7 und ein Hohlrad 5 aufweist. Das Planetengetriebe 4 ist als zweistufiges Planetengetriebe ausgebildet. Zwischen dem Elektromotor 2 und dem Planetengetriebe 4 ist eine elektromagnetische Bremse angeordnet. Bestandteile der elektromagnetischen Bremse sind eine Erregerspule 8, ein Vorspannmittel in der Form von Druckfedern 13, eine Ankerplatte 9, eine Bremsscheibe 10 und einer Druckplatte 12.

Das Hohlrad 5 weist hierbei eine Ringnut 6 als Ausnehmung des Hohlrads 5 auf, in welcher die Erregerspule 8 der Bremse aufgenommen ist und die zu einer dem Elektromotor 2 zugewandten Stirnseite des Hohlrads 5 geöffnet ist. Dabei ist die Ringnut 6 derart gestaltet, dass sie die Erregerspule 8 in axialer Richtung betrachtet vollständig aufnimmt, wobei die Erregerspule 8 die Ringnut 6 weitestgehend ausfüllt, um eine möglichst hohe Wicklungsdichte zu erreichen und dadurch die erzeugbare elektromagnetische Kraft der Erregerspule 8 für ihren Bauraum zu maximieren. Die Erregerspule 8 ist dabei derart in der Ringnut 6 angeordnet, dass ihre dem Elektromotor 2 zugewandte Stirnseite die gleiche axiale Position wie die dem Elektromotor 2 zugewandte Stirnseite der Planetenräder 7 aufweist.

Neben der Ringnut 6 weist das Hohlrad 5 auch weitere Ausnehmungen 14 auf, die ebenfalls zur dem Elektromotor 2 zugewandten Stirnseite des Hohlrads 5 geöffnet sind und in denen Vorspannmittel in der Form von Druckfedern 13 sitzen. Diese Ausnehmungen 14 sind im gezeigten Ausführungsbeispiel radial außerhalb der Ringnut 6 angeordnet.

Neben der dem Elektromotor 2 zugewandten Stirnseite des Hohlrads 5 ist die Ankerplatte 9 angeordnet, welche drehfest zum Hohlrad 5 aber in der axialen Richtung der Antriebseinheit 1 beweglich gelagert ist. Die Ankerplatte 9 ist derart angeordnet, dass ihre axiale Ausdehnung zumindest teilweise mit einem Teil der axialen Ausdehnung des Hohlrads 5 überlappt. Insbesondere ist die Ankerplatte 9 als Ringsscheibe ausgeführt, wobei ein Vorsprung des Hohlrads 5, welche eine Abdeckung des Planetengetriebes 4 hält, in axialer Richtung in die Öffnung der Ringscheibe/Ankerplatte 9 reicht. Auf die Ankerplatte 9 wirken zum einen die Druckkräfte der Druckfedern 13, welche die Ankerplatte 9 in Richtung der Bremsscheibe 10 pressen, welche zwischen der Ankerplatte 9 und der Druckplatte 12 in axialer Richtung angeordnet ist. Entgegen der Druckkräfte der Druckfedern 13 wirken die elektromagnetischen Kräfte der Erregerspule 8, wenn diese entsprechend bestromt wird.

Die Bremsscheibe 10 ist direkt an das Motorritzel 15 der Motorwelle 3 angebunden und weist außerdem Bremsbeläge 11 auf. Wenn nun die Ankerplatte 9 durch die Druckkräfte der Druckfedern 13 auf die Bremsscheibe 10 bzw. die Bremsbeläge 11 gepresst wird, weil die Erregerspule 8 nicht mehr bestromt wird oder die elektromagnetische Kraft der Erregerspule 8 kleiner als die Druckkräfte der Druckfedern 13 ist, werden die Bremsbeläge 11 der Bremsscheibe 10 gleichzeitig auf die Druckplatte 12 gepresst. Die Bremsscheibe 10 wird damit von beiden Seiten mit Druck beaufschlagt und der Elektromotor 2 wird über den Formschluss zwischen Bremsscheibe 10 und Motorritzel 15 der Motorwelle 3 gebremst. Dieser Zustand wird auch als angezogener Zustand der Bremse bezeichnet. Wenn nun die Erregerspule 8 wieder ausreichend bestromt wird, wirkt die elektromagnetische Kraft der Erregerspule 8 entgegen der Druckkräfte der Druckfedern 13 und die Ankerplatte 9 wird in Richtung des Hohlrads 5 gezogen, sodass die Bremsscheibe 10 wieder zwischen der Ankerplatte 9 und der Druckplatte 12 mit der Motorwelle 3 rotieren kann. Die Bremse befindet sich damit im gelösten Zustand.

Um dieses Zusammenspiel exakt einstellen zu können, sind zwischen der dem Elektromotor 2 zugewandten Stirnseite des Hohlrads 5 und der der Bremsscheibe 10 zugewandten Stirnseite der Druckplatte 12 Distanzstücke 16 angeordnet. Diese definieren den axialen Raum, in dem die Ankerplatten 9 und die Bremsscheibe 10 liegen.

In dem gezeigten Ausführungsbeispiel bildet die Druckplatte 12 gleichzeitig den Motorflansch 12 des Elektromotors 2. Der Motorflansch 12 ist dabei mit den Distanzstücken 16 als Abstandhalter mit dem Hohlrad 5 verschraubt. Das Hohlrad 5 ist damit ein festes Hohlrad. Die Schrauben bzw. die Distanzstücke 16 können als Führung von radialen Nuten der Ankerplatte 9 dienen, die dadurch drehfest aber axial beweglich gelagert ist.

Indem zum einen keine separate Druckplatte verwendet wird und zum andern die Erregerspule 8 sowie die Ankerplatte 9, zumeist teilweise, in ihrer axialen Ausdehnung mit der axialen Ausdehnung des Hohlrads 5 überlappen, ist die Antriebseinheit 1 in axialer Richtung besonders kompakt aufgebaut. Dazu können Komponenten wie eine separate Spulenhalterung oder eine separate Druckplatte eingespart werden, wodurch sowohl Kosten als auch Gewicht eingespart werden können.

Vorteilhafter Weise kann eine derartige Antriebseinheit 1 als Radantrieb eingesetzt werden.

### Bezugszeichenliste

- 1: Antriebseinheit
- 2: Elektromotor
- 3: Motorwelle
- 4: Planetengetriebe
- 5: Hohlrad
- 6: Ringnut
- 7: Planetenrad
- 8: Erregerspule
- 9: Ankerplatte
- 10: Bremsscheibe
- 11: Bremsbelag
- 12: Druckplatte / Motorflansch
- 13: Druckfeder
- 14: Ausnehmung
- 15: Motorritzel
- 16: Distanzstück

## Patentansprüche

1. Antriebseinheit (1) mit
- einem Elektromotor (2), der eine Motorwelle (3) antreibt,
- einem Planetengetriebe (4) mit einem Hohlrad (5), wobei das Planetengetriebe (4) zumindest eine erste Getriebestufe aufweist, und wobei die erste Getriebestufe mindestens ein Planetenrad (7) aufweist, und
- einer elektromagnetischen Bremse mit einer Erregerspule (8), wobei die elektromagnetische Bremse zwischen dem Elektromotor (2) und dem Planetengetriebe (4) angeordnet ist und dazu eingerichtet ist, die Motorwelle (3) zu bremsen,
**dadurch gekennzeichnet, dass** die Erregerspule (8) zumindest teilweise in einer Ausnehmung des Hohlrads (5) aufgenommen ist.

2. Antriebseinheit (1) nach Anspruch 1, **dadurch gekennzeichnet, dass** die Erregerspule (8) derart in der Ausnehmung aufgenommen ist, dass eine axiale Ausdehnung des Planetenrads (7) zu mindestens 50%, vorzugsweise zu mindestens 70%, mit einer axialen Ausdehnung der Erregerspule (8) überlappt.

3. Antriebseinheit (1) nach Anspruch 1 oder 2, **dadurch gekennzeichnet, dass** eine axiale Position einer dem Elektromotor (2) zugewandten Stirnseite der Erregerspule (8) entweder einer axialen Position einer dem Elektromotor (2) zugewandten Stirnseite des Planetenrads (7) entspricht oder die axiale Position der dem Elektromotor (2) zugewandten Stirnseite der Erregerspule (8) weiter von dem Elektromotor (2) entfernt ist als die axiale Position der dem Elektromotor (2) zugewandten Stirnseite des Planetenrads (7)

4. Antriebseinheit (1) nach einem der Ansprüche 1 bis 3, **dadurch gekennzeichnet, dass** eine Ringnut (6) die Ausnehmung des Hohlrads (5) bildet, wobei die Ringnut (6) an einer dem Elektromotor (2) zugewandten Stirnseite des Hohlrads (5) geöffnet ist.

5. Antriebseinheit (1) nach einem der Ansprüche 1 bis 4, **dadurch gekennzeichnet, dass** die Erregerspule (8) derart in der Ausnehmung aufgenommen ist, dass die Erregerspule (8) in axialer Richtung betrachtet vollständig in der Ausnehmung aufgenommen ist.

6. Antriebseinheit (1) nach einem der Ansprüche 1 bis 5, **dadurch gekennzeichnet, dass** die Motorwelle (3) ein Sonnenrad der ersten Getriebestufe des Planetengetriebes (4) bildet.

7. Antriebseinheit (1) nach einem der Ansprüche 1 bis 6, **dadurch gekennzeichnet, dass** die elektromagnetische Bremse in axialer Richtung ausgehend vom Elektromotor (2) eine Druckplatte (12), eine Bremsscheibe (10), die mit der Motorwelle (3) verbunden ist, eine Ankerplatte (9) und mindestens ein Vorspannmittel aufweist, wobei die Bremse einen angezogenen Zustand aufweist, in dem das Vorspannmittel die Ankerplatte (9) auf die Bremsscheibe (10) presst und die Bremsscheibe (10) dadurch auf die Druckplatte (12) gepresst wird, und wobei die Bremse einen gelösten Zustand aufweist, in dem die Erregerspule (8) die Ankerplatte (9) entgegen einer Kraft des Vorspannmittels auf Grund einer durch die Erregerspule (8) erzeugten elektromagnetischen Kraft zu sich zieht.

8. Antriebseinheit (1) nach Anspruch 7, **dadurch gekennzeichnet, dass** eine axiale Ausdehnung der Ankerplatte (9) zumindest teilweise, vorzugsweise vollständig, mit einem Teil der axialen Ausdehnung des Hohlrads (5) überlappt.

9. Antriebseinheit (1) nach Anspruch 7 oder 8, **dadurch gekennzeichnet, dass** die Ankerplatte (9) drehfest gegenüber dem Hohlrad (5) gehalten ist.

10. Antriebseinheit (1) nach einem der Ansprüche 7 bis 9, **dadurch gekennzeichnet, dass** eine Zwischenplatte des Elektromotors (2), insbesondere ein Motorflansch (12), die Druckplatte (12) ausbildet.

11. Antriebseinheit (1) nach einem der Ansprüche 7 bis 10, **dadurch gekennzeichnet, dass** die Bremsscheibe (10) direkt an ein Motorritzel (15) der Motorwelle (3) angebunden ist.

12. Antriebseinheit (1) nach einem der Ansprüche 7 bis 11, **dadurch gekennzeichnet, dass** das Vorspannmittel in einer Ausnehmung (14) des Hohlrads (5) sitzt.

13. Antriebseinheit (1) nach einem der Ansprüche 7 bis 12, **dadurch gekennzeichnet, dass** ein Distanzstück (16) zwischen einer Anlagefläche an der dem Elektromotor (2) zugewandten Stirnseite des Hohlrads (5) und einer der Bremsscheibe (10) zugewandten Fläche der Druckplatte (12) angeordnet ist.

14. Antriebseinheit (1) nach einem der Ansprüche 1 bis 13, **dadurch gekennzeichnet, dass** die Antriebseinheit (1) ein Radantrieb ist.

## Claims

1. Drive unit (1) comprising:
- an electric motor (2) which drives a motor shaft (3),
- a planetary gearbox (4) having a ring gear (5), wherein the planetary gearbox (4) has at least one first gear stage and wherein the first gear stage has at least one planet gear, and
- an electromagnetic brake having an excitation coil (8), wherein the electromagnetic brake is arranged between the electric motor (2) and the planetary gear (4) and is adapted to brake the motor shaft (3),
**characterized in that** the excitation coil (8) is at least in part accommodated in a recess of the ring gear (5).

2. Drive unit (1) according to claim 1, **characterized in that** the excitation coil (8) is accommodated in the recess such that an axial extent of the planet gear (7) overlaps at least 50%, preferably at least 70%, with an axial extent of the excitation coil (8).

3. Drive unit (1) according to claim 1 or 2, **characterized in that** an axial position of an end face of the excitation coil (8) facing the electric motor (2) either corresponds to an axial position of an end face of the planet gear (7) facing the electric motor (2) or the axial position of the end face of the excitation coil (8) facing the electric motor (2) is further away from the electric motor (2) than the axial position of the end face of the planet gear (7) facing the electric motor (2).

4. Drive unit (1) according to one of claims 1 to 3, **characterized in that** an annular groove (6) forms the recess of the ring gear (5), wherein the annular groove (6) is open on an end face of the ring gear (5) facing the electric motor (2).

5. Drive unit (1) according to one of claims 1 to 4, **characterized in that** the excitation coil (8) is accommodated in the recess such that the excitation coil (8) is completely accommodated in the recess when viewed in the axial direction.

6. Drive unit (1) according to one of claims 1 to 5, **characterized in that** the motor shaft (3) forms a sun gear of the first gear stage of the planetary gearbox (4).

7. Drive unit (1) according to one of claims 1 to 6, **characterized in that** the electromagnetic brake comprises a pressure plate (12) in the axial direction starting from the electric motor (2), a brake disk (10) connected to the motor shaft (3), an armature plate (9) and at least one biasing means, wherein the brake has an applied condition in which the biasing means presses the armature plate (9) onto the brake disk (10), thereby pressing the brake disk (10) onto the pressure plate (12), and wherein the brake has a released state in which the excitation coil (8) pulls the armature plate (9) toward it against a force of the biasing means due to an electromagnetic force generated by the excitation coil (8).

8. Drive unit (1) according to claim 7, **characterized in that** an axial extent of the armature plate (9) overlaps at least partially, preferably completely, with a part of the axial extent of the ring gear (5).

9. Drive unit (1) according to claim 7 or 8, **characterized in that** the armature plate (9) is held non-rotatably relative to the ring gear (5).

10. Drive unit (1) according to one of claims 7 to 9, **characterized in that** an intermediate plate of the electric motor (2), in particular a motor flange (12), forms the pressure plate (12).

11. Drive unit (1) according to one of claims 7 to 10, **characterized in that** the brake disk (10) is directly connected to a motor pinion (15) of the motor shaft (3).

12. Drive unit (1) according to one of claims 7 to 11, **characterized in that** the biasing means is seated in a recess (14) of the ring gear (5).

13. Drive unit (1) according to one of claims 7 to 12, **characterized in that** a spacer (16) is arranged between a contact surface on the end face of the ring gear (5) facing the electric motor (2) and a surface of the pressure plate (12) facing the brake disk (10).

14. Drive unit (1) according to one of claims 1 to 13, **characterized in that** the drive unit (1) is a wheel drive.

## Revendications

1. Unité d'entraînement (1), comprenant
- un moteur électrique (2) entraînant un arbre de moteur (3),
- un engrenage planétaire (4) comprenant une couronne dentée (5), dans lequel l'engrenage planétaire (4) présente au moins un premier étage d'engrenage, et dans lequel le premier étage d'engrenage présente au moins une roue planétaire (7), et
- un frein électromagnétique comprenant une bobine d'excitation (8), dans laquelle le frein électromagnétique est agencé entre le moteur électrique (2) et l'engrenage planétaire (4) et est conçu pour freiner l'arbre de moteur (3),
**caractérisée en ce que** la bobine d'excitation (8) est accueillie au moins partiellement dans un évidement de la couronne dentée (5).

2. Unité d'entraînement (1) selon la revendication 1, **caractérisée en ce que** la bobine d'excitation (8) est accueillie dans l'évidement de telle manière qu'une extension axiale de la roue planétaire (7) chevauche jusqu'à au moins 50 %, de manière préférée jusqu'à au moins 70 %, d'une extension axiale de la bobine d'excitation (8).

3. Unité d'entraînement (1) selon la revendication 1 ou 2, **caractérisée en ce qu'**une position axiale d'une face frontale, tournée vers le moteur électrique (2), de la bobine d'excitation (8) correspond à une position axiale d'une face frontale, tournée vers le moteur électrique (2), de la roue planétaire (7) ou bien la position axiale de la face frontale, tournée vers le moteur électrique (2), de la bobine d'excitation (8) est plus éloignée du moteur électrique (2) que ne l'est la position axiale de la face frontale, tournée vers le moteur électrique (2), de la roue planétaire (7).

4. Unité d'entraînement (1) selon l'une quelconque des revendications 1 à 3, **caractérisée en ce qu'**une rainure annulaire (6) forme l'évidement de la couronne dentée (5), dans laquelle la rainure annulaire (6) est ouverte au niveau d'une face frontale, tournée vers le moteur électrique (2), de la couronne dentée (5).

5. Unité d'entraînement (1) selon l'une quelconque des revendications 1 à 4, **caractérisée en ce que** la bobine d'excitation (8) est accueillie dans l'évidement de telle manière que la bobine d'excitation (8) est complètement accueillie dans l'évidement lorsqu'elle est considérée dans la direction axiale.

6. Unité d'entraînement (1) selon l'une quelconque des revendications 1 à 5, **caractérisée en ce que** l'arbre de moteur (3) forme une roue solaire du premier étage d'engrenage de l'engrenage planétaire (4).

7. Unité d'entraînement (1) selon l'une quelconque des revendications 1 à 6, **caractérisée en ce que** le frein électromagnétique présente, dans la direction axiale à partir du moteur électrique (2), une plaque de pression (12), un disque de frein (10) relié à l'arbre de moteur (3), une plaque d'induit (9) et au moins un moyen de précontrainte, dans laquelle le frein présente un état serré au sein duquel le moyen de précontrainte presse la plaque d'induit (9) sur le disque de frein (10) et le disque de frein (10) est ainsi pressé sur la plaque de pression (12), et dans laquelle le frein présente un état desserré au sein duquel la bobine d'excitation (8) tire la plaque d'induit (9) vers elle à l'encontre d'une force du moyen de précontrainte en raison d'une force électromagnétique générée par la bobine d'excitation (8).

8. Unité d'entraînement (1) selon la revendication 7, **caractérisée en ce qu'**une extension axiale de la plaque d'induit (9) chevauche au moins partiellement, de manière préférée complètement, une partie de l'extension axiale de la couronne dentée (5).

9. Unité d'entraînement (1) selon la revendication 7 ou 8, **caractérisée en ce que** la plaque d'induit (9) est retenue de manière solidaire en rotation par rapport à la couronne dentée (5).

10. Unité d'entraînement (1) selon l'une quelconque des revendications 7 à 9, **caractérisée en ce qu'**une plaque intermédiaire du moteur électrique (2), en particulier une bride de moteur (12), forme la plaque de pression (12).

11. Unité d'entraînement (1) selon l'une quelconque des revendications 7 à 10, **caractérisée en ce que** le disque de frein (10) est relié directement à un pignon moteur (15) de l'arbre de moteur (3).

12. Unité d'entraînement (1) selon l'une quelconque des revendications 7 à 11, **caractérisée en ce que** le moyen de précontrainte est situé dans un évidement (14) de la couronne dentée (5).

13. Unité d'entraînement (1) selon l'une quelconque des revendications 7 à 12, **caractérisée en ce qu'**une pièce d'écartement (16) est agencée entre une surface d'appui située au niveau de la face frontale, tournée vers le moteur électrique (2), de la couronne dentée (5) et une surface, tournée vers le disque de frein (10), de la plaque de pression (12).

14. Unité d'entraînement (1) selon l'une quelconque des revendications 1 à 13, **caractérisée en ce que** l'unité d'entraînement (1) est un entraînement de roue.
